Europäisches Patentamt

European Patent Office

Office européen des brevets

(19)

(11) Veröffentlichungsnummer: **0 303 591**
A2

(12) # EUROPÄISCHE PATENTANMELDUNG

(21) Anmeldenummer: **88890204.6**

(22) Anmeldetag: **04.08.88**

(51) Int. Cl.⁴: **B 09 B 1/00**

(30) Priorität: **12.08.87 AT 2032/87**

(43) Veröffentlichungstag der Anmeldung:
**15.02.89 Patentblatt 89/07**

(84) Benannte Vertragsstaaten:
**AT BE CH DE ES FR GB GR IT LI LU NL SE**

(71) Anmelder: **ALPINE BAUGESELLSCHAFT MBH**
**Alte Bundesstrasse 10**
**A-5071 Salzburg/Wals (AT)**

(72) Erfinder: **Lüftenegger, Ferdinand**
**Andrä-Blümlstrasse 22**
**A-5023 Salzburg 1 (AT)**

**Aluta-Oltyan, Dietmar**
**Alte Bundesstrasse 10**
**A-5071 Wals-Salzburg (AT)**

(74) Vertreter: **Collin, Hans, Dipl.-Ing. Dr. et al**
**Patentanwälte Dipl.-Ing. Dr. Hans Collin Dipl.-Ing. Erwin**
**Buresch Dipl.-Ing. Dr. Helmut Wildhack Dipl.-Ing. Armin**
**Häupl Mariahilfer Strasse 50**
**A-1070 Wien (AT)**

(54) Verfahren zum Behandeln von Deponiegut, Deponiebehälter, insbesondere zur Durchführung dieses Verfahrens, sowie abnehmbares Dach für Deponiebehälter.

(57) Vorgeschlagen wird ein Verfahren zum Behandeln von Deponiegut, bei dem Deponiegut in einem allseits zumindest im wesentlichen abgedichteten Deponiekörper mit Flüssigkeiten und/oder Gasen behandelt wird; weiterhin ein Behälter zur Langzeitlagerung von Deponiegut, mit einem auf einer Basis aufruhenden Mantel und einer Abdeckung für den Mantelhohlraum, sowie mit einer Radialgefälleentwässerung zur Behälterbodenmitte, bei dem am Behälterboden eine erste Flächenfilterschicht, mit Drainagerohren und darüber eine erste mineralische Dichtlage angeordnet ist, wobei die erste Flächenfilterschicht und die Dichtlage jeweils die freie Oberfläche des Behälterbodens bedecken, und sich an die Dichtlage nach oben hin eine Boden/Seitendichtschürze anschließt, deren Seitenteil dicht am Mantel anliegt, sowie oberhalb und radial innerhalb der Boden/Seitendichtschürze eine zweite Flächenfilterschicht mit Drainagerohren vorgesehen ist, über der das Deponiegut lagert; sowie ein abnehmbares Dach für zylindrische Deponiebehälter mit zentral beschicktem Kreisförderer für das Deponiegut.

_Fig. 4_

## Beschreibung

## Verfahren zum Behandeln von Deponiegut, Deponiebehälter, insbesondere zur Durchführung dieses Verfahrens, sowie abnehmbares Dach für Deponiebehälter

Die Erfindung betrifft ein Verfahren zum Behandeln von Deponiegut, einen besonderen Deponiebehälters, insbesondere zur Durchführung dieses Verfahrens, sowie ein besonders abnehmbares Dach mit Gutzubringer und Kreisförderer, ebenfalls für Deponiebehälter.

Ungeschützte Deponien stellen eine wesentliche Umweltgefahr dar und es ist schon lange bekannt, daß man Deponien zum Schutz von Oberflächen- und Grundwasser abdichtend um- und unterfangen sollte, was allerdings bis jetzt sehr häufig nicht erfolgt.

Weiters wurde schon gefunden, daß man Deponiegut verschiedener Herkunft nicht wahllos, sondern getrennt lagern sollte, da zwischen den verschiedenen Fraktionen viele unkontrollierbare Reaktionen über längere Zeiträume auftreten können. Dies ist aber bekanntlich schwierig; es stehen selten die Möglichkeiten dazu zur Verfügung.

Angestrebt wird jedem Fall die Erreichung eines stabilen Deponiegutzustands, in welchem keine Veränderungen im Deponiegut mehr auftreten und die Erfahrung hat bereits gezeigt, daß bei verschiedenem Mischdeponiegut dieser Zustand auch nach einigen Jahrzehnten noch nicht erreicht wird, sodaß eine Sickerwasserkontrolle und Entsorgung über diese langen Zeiträume nötig wäre, in vielen Fällen aber nicht durchgeführt wird.

Erfindungsgemäß wird nunmehr vorgeschlagen, die Deponiegutkörper nicht sich selbst zu überlassen und nur Sickerwasserkontrollen bzw. -entsorgung zu betreiben, sondern aktiv auf das Deponiegut einzuwirken, in den angestrebten stabilen Zustand überzugehen.

Es gibt bereits sehr viele unterschiedliche Ansätze zur Behandlung von Massen, die, z.B. als Abfallprodukte, irgendwo gelagert werden sollen oder irgendwo lagern.

So beschreibt die AT-PS 372 308 ein Verfahren zur Beseitigung von öligen, mit Wasser unmischbaren Abfällen durch Adsorbieren an einer festen Substanz (z.B. Kalkmehl) und Anrühren mittels eines flüssigen umweltgefährdenden Abfallstoffs zu einer wässerigen Aufschlämmung, die nach Zugabe von Zement zu einem festen Stein erstarrt.

Eine ähnliche Verfestigung durch Zementzusatz ist in der ZP-A 0 104 773 für flüssige und halbflüssige organische Abfallstoffe, z.B. von Belebtschlamm und Primärschlamm aus Abwasseraufbereitungsanlagen, beschrieben. Das dabei erhaltene feste Produkt wird als solches als Deponiegut offen gelagert oder in gemahlener Form als Dünger verwendet.

Auch Verfahren zur Auslaugung von Bodenformationen zur Entfernung von Schadstoffen werden bereits vorgeschlagen. So beschreibt die EP-A 0 185 831 ein kontinuierliches Verfahren, bei dem Boden mit Spülwasser angeschlämmt und dadurch extrahiert wird. Der Schlamm geht vor Ort zurück; das schadstoffbeladene Spülwasser geht zu einer Wasseraufbereitung.

Die Extraktion von Bodenformationen vor Ort ist in den EP-A 0 059 020 und EP-A 0 515 768 beschrieben. Gemäß der EP-A 0 059 020 sind rund um die kontaminierte Bodenschicht Dichtwände bis zu einer flüssigkeitsdichten Bodenschicht abgeteuft und im umgrenzten Raum spülflüssigkeitsführende Bodenlanzen bis zur gewünschten Tiefe niedergebracht. Die Bodenlanzen sind entweder Drucklanzen, wobei die eingebrachte Flüssigkeit die kontaminierten Bereiche von unten her spült und die beladene Spülflüssigkeit von der Erdoberfläche abgenommen wird; oder Sauglanzen, wobei die Spülflüssigkeit auf die Erdoberfläche aufgebracht und nach Durchtritt durch den kontaminierten Bodenbereich unterhalb des Bereichs abgesaugt wird. Die EP-A 0 155 768 beschreibt ein ähnliches Verfahren, bei dem in einem seitlich umfangenen und unterfangenen Bodenbereich ein kombiniertes Drucklanzen-Sauglanzensystem niedergebracht wird, so daß die Bodenspülung im wesentlichen in Horizontalrichtung erfolgt. Die abgesaugte Spülflüssigkeit wird gereinigt und im Kreislauf geführt.

Endlich betrifft die EP-A 0 181 211 die Behandlung einer unterirdischen kombinierten Bodenformation vor Ort, bei dem eine wässerige Behandlungsflüssigkeit eingebracht wird, aber keine Spülfunktion hat, da sie nicht wieder abgesaugt, sondern vor Ort belassen wird. Die Behandlungsflüssigkeit ist eine Wasserlösung mit einem Gehalt an Wasserstoffperoxid oder Wasserstoffperoxidbildnern (Na-perborat, Na-percarbonat etc.) und an einem hydratisierbaren Polymer, das die Viskosität der Behandlungslösung soweit erhöht, daß deren Diffusion aus dem örtlichen Behandlungsbereich hinaus verhindert wird.

Erfindungsgemäß wird vorgeschlagen, eine Behandlung von Deponiegut mit Flüssigkeiten und/oder Gasen in einem allseits zumindest im wesentlichen abgedichteten Deponiekörper durchzuführen. Auf diese Weise ist ein geschlossenes System gegeben, in dem einerseits keine Störung der Vorgänge im Deponiegut von außen her und anderseits keine Verluste nach außen und keine Beeinflussung der Umwelt durch diese Vorgänge möglich ist.

Als Deponiegut sind im Rahmen der vorliegenden Beschreibung alle lagerbaren Güter zu verstehen, deren zumindest mittelfristige Lagerung angestrebt wird. Dies bezieht sich nicht nur auf reine Abfallprodukte, sondern u.a. auf Massen, die industrielle Nebenprodukte darstellen und einen Gehalt an wiederverwertbaren Stoffen aufweisen.

Das erfindungsgemäßen Verfahren ist vor allem dadurch gekennzeichnet, daß Deponiegut in einem allseits zumindest im wesentlichen abgedichteten Deponiekörper mit Flüssigkeiten und/oder Gasen behandelt, insbesondere gespült und/oder gelaugt wird.

Bei Gasen ist vor allem an Luft gedacht, um aerobe oder Oxidationsprozesse zu beschleunigen, die Flüssigkeit ist im einfachsten Fall Brauchwasser.

Besonders vorteilhaft ist aber auch eine Reaktionsspülung, wobei dem Spülgas und/oder der Spülflüssigkeit mit dem Deponiegut reaktionsfähige Bestandteile zugesetzt werden, um gezielt Reaktionen zu provozieren und/oder Reaktionsprodukte bzw. Deponiegutbestandteile gezielt auszulaugen.

Es kann günstig sein, das Behandlungsmedium im Kreislauf zu führen, so daß dieses nicht laufend neu zugeführt und anschließend entsorgt werden muß. Im Kreislauf wird vorzugsweise mindestens eine Reinigungsstufe eingeschaltet, so daß z.B. gezielt Wertstoffe wieder gewinnbar sind. In manchen Fällen kann es allerdings genügen, das Behandlungsmedium einfach umzupumpen, um eine Strömung im Deponiegut zu erzeugen, sodaß reaktionsfähige Bestandteile des Deponieguts nicht nur durch Diffusion wandern.

Besonders vorteilhaft ist es, im Deponiekörper eine gerichtete elektrochemische Diffusionsströmung aufrechtzuerhalten, wobei die Flüssigkeit im Deponiekörper aus Elektrolyten zusammen mit zwei verschiedenen Metallflächen ein Primärelement bildet. Dies kann durch stationäre oder bewegliche Einrichtungen am Behälter für das Deponiegut erfolgen, z.B. durch verschiedenartige Auskleidungen oder bewegliche Zangen. Es ist auch möglich, zur Beschleunigung dieses Prozesses unter Anlegung von Fremdspannung zu arbeiten. Die Auslaugflüssigkeiten und/oder Gase werden in üblicher Weise gereinigt und im Kreislauf geführt, wobei bei der Reinigung die aus dem Deponiegut extrahierten Schad- bzw. Wertstoffe und/oder deren Reaktionsprodukte nach üblichen chemischen bzw. physikalischen Aufarbeitungsverfahren abgetennt und gewonnen werden können. Nur beispielsweise werden hiezu Fällungs-, Komplexierungs-, Ionentausch- und elektrische Verfahren, wie Elektrophorese- und Dialyseverfahren genannt.

Die einfachsten Deponien, die ohne besondere Bauwerke auskommen, sind sogenannte Teufenponien in stillgelegten Bergwerken und Oberflächendeponien, die in natürlichen oder künstlichen Geländevertiefungen angelegt werden, deren Boden und Seiten z.B. mit bindigem Boden und/oder Folien gegenüber dem Grundwasser abgedichtet wird und die ebenso nach erfolgter Befüllung und Schließung nach oben abgedichtet werden.

Derartige Möglichkeiten stehen nicht in ausreichendem Maß zur Verfügung und man ist dazu übergegangen, gesonderte Deponiebehälter in Hoch- und/oder Tiefbauweise zu errichten.

Ein Sonderfall eines lediglich seitlich und nach unten abgedichteten Deponiebeckens ist in der US-PS 4 335 978 geoffenbart. Die Abdichtung ist zweischalig und im Zwischenraum zwischen Innen- und Außenschale befindet sich eine Druckflüssigkeit, die einen Durchtritt von Sickerwasser aus dem Deponiegut durch die Innenschale in Zwischenraum verhindert.

In Zusammenwirkung mit allseits geschlossenen Deponiebehältern ist vor allem das sogenannte Multibarrierenprinzip wesentlich, nach dem zwischen Deponiegut und Umwelt eine Mehrschichtsicherung angeordnet wird, die den Deponiekörper allseits umgibt und wobei in einzelner dieser Barriereschichten eine Sickerwasserabführung angeordnet ist, wie z.B. in der EP-A 0 130 773 beschrieben.

Die DE-OS 33 03 067 (EP-A 0 187 874) beschreibt eine Lagerstätte für Abfälle, bei der auf einer undurchlässigen Betonsohle einzelne Betonbehälter bienenwabenartig zu einem Behälterkomplex zusammengebaut werden. Die Behälter werden unter einem Schutzdach gefüllt und dann mit einer Betondecke verschlossen. Unterhalb der Betonsohle ist eine Filterschicht angeordnet, in der Drainagerohre angeordnet sind und die gesamte Anordnung ist seitlich von einem Schutzwall aus wasserundurchlässigem Boden umschlossen, dem außen ein Abzugsgraben mit Kontrolleinrichtung vorgelagert ist.

Die DE-OS 35 08 824 betrifft einen Doppelmanteldeponiebehälter, dessen Unterteil als Bodenwanne ausgebildet ist. In diesem Bereich befindet sich im Zwischenraum zwischen den dichten Betonmänteln eine Füllkörperschicht mit eingelegtem Drainagesystem.

Die EP-A 0 204 895 betrifft einen zylindrischen Tiefbehälter für deponiefähige Abfälle, der nach seiner Befüllung durch eine mineralische Dichtlage abgedeckt ist. Er besteht aus einem Doppelmantel mit zentralem Begehschacht, wobei der Ringraum zwischen Außen- und Innenmantel zum Begehschacht hin über Radialkanäle entwässert wird. Zwischen Außenmantel und Erdreich ist eine weitere Drainageschicht vorgesehen, die zum Begehschacht hin entwässert und eine weitere Flüssigkeitsableitung über den Begehschacht kann vorgesehen sein, um über zu diesem Zweck in der Bodenplatte angeordnete Bodenstutzen im Innenmantel in der Befüllungsmasse nach unten sickernde Flüssigkeit abzuziehen.

Die Erfindung betrifft weiterhin einen Behälter zur Langzeitlagerung von Deponiegut, mit einem auf einer Basis aufruhenden Mantel und einer Abdeckung für den Mantelhohlraum, insbesondere Ringbehälter mit Zentralbeschickung und zentralem Begehschacht, sowie mit einer Radialgefälleentwässerung zur Behälterbodenmitte, wie er z.B. aus der EP-A 0 204 895 bekannt ist, wobei aber im Gegensatz zu dieser bekannten Ausführungsform eine dichte Bodenplatte vorgesehen ist.

Aus der WO 86/04943 ist u.a. eine Bodenabdichtung für Deponien bekannt, bei der zwei Abdichtschichten im Abstand übereinander angeordnet sind, die wahlweise aus Kunststoffolien der Mineralschichten bestehen und zwischen denen eine Kontrollfilterschicht angeordnet ist, in der zwei Leitungssysteme eingebaut sind. Die Abdichtschichten sind durch dichte Abschottungen zwischen den Abdeckschichten rasterförmig miteinander verbunden und das eine Leitungssystem in der Flächenfilterschicht dient der Injektion von Dichtstoffen, während das andere bei unbeschädigter oberer Abdichtschicht als Kontrollsystem und im Falle einer bei Versagen dieser Abdichtschicht nötigen Injektion von Dichtstoffen als Entlüftung und als Abfluß für von oben in die Flächenfilterschicht eingesickerte Flüssigkeit dient, die sonst nicht abgeführt werden könnte.

Oberhalb der oberen Abdichtschicht ist eine Drainageschicht mit einem eingelegten Rohrsystem zur seitlichen Abführung von im Deponiegut nach unten sichernder Flüssigkeit vorgesehen.

Es wurde gefunden, daß diese Abdichtungsweise kompliziert und insbesondere bei Versagen der oberen Abdichtschicht nicht verläßlich ist, insbesondere nicht als Bodenabdichtung in einem Behälter. Es wurde gefunden, daß weitaus günstigere Ergebnisse dann erzielbar sind, wenn am Boden eines Deponiegutbehälters zuerst eine erste Flächenfilterschicht mit Drainagerohren und gegebenenfalls Injektionsrohren und darüber unmittelbar aufeinanderfolgend eine mineralische Dichtlage und eine Boden/Seitendichtschürze angeordnet werden, somit zwei direkt aneinanderliegende Dichtungen vorgesehen sind. Dies hat zum Ergebnis, daß beim Auftreten einer Leckstelle in der oberen Dichtung, der Boden/Seitendichtschürze, ein sofortiges Dichtquellen der darunter befindlichen mineralischen Dichtlage (z.B. Tone) im Leckbereich eintritt, das Leck somit praktisch sofort verschlossen wird.

Der erfindungsgemäße Behälter ist demgemäß vor allem dadurch gekennzeichnet, daß am Behälterboden, gegebenenfalls oberhalb eine Ausgleichsschicht zur Basis, eine erste Flächenfilterschicht mit Drainagerohren und darüber eine erste mineralische Dichtlage, insbesondere aus Tonmineralien, angeordnet ist, wobei die erste Flächenfilterschicht und die Dichtlage jeweils die freie Oberfläche des Behälterbodens bedecken, und daß sich an die Dichtlage nach oben hin eine Boden/Seitendichtschürze anschließt, deren Seitenteil dicht am Mantel und gegebenenfalls an Behältereinbauten, wie Schächten anliegt, sowie daß oberhalb und radial innerhalb der Boden/Seitendichtschürze eine zweite Flächenfilterschicht mit Drainagerohren vorgesehen ist, auf der, vorzugsweise unter Zwischenschaltung einer porösen Schutzschicht für die zweite Flächenfilterschicht, das Deponiegut lagert.

Weitere Kennzeichen des erfindungsgemäßen Behälters, die allein oder in beliebigen Kombinationen verwirklicht sein können, sind die folgenden:

a) Zwischen der zweiten Flächenfilterschicht, gegebenenfalls Schutzschicht, und Deponiegut einerseits sowie der Boden/Seitendichtschürze anderseits ist eine radiale mineralische Ringdichtschicht vorgesehen, die vorzugsweise zum Deponiegut hin durch ein Stützprofil abgestützt ist.

b) Die Boden/Seitendichtschürze ist aus elastischem Material, vorzugsweise einer HDPE-Folie,gebildet und weist insbesondere im Boden/Seitenübergangsbereich eine Dehnungsausgleichzone auf.

c) Zwischen der ersten Flächenfilterschicht und der mineralischen Dichtlage, zwischen der Boden/Seitendichtschürze und der zweiten Flächenfilterschicht und/oder zwischen der zweiten Flächenfilterschicht und der porösen Schutzschicht ist eine gas- und flüssigkeitsdurchlässige Stützschicht, insbesondere ein Netz oder Vlies, vorzugsweise aus Kunststoff, vorgesehen.

d) Die Oberfläche des gelagerten Deponieguts ist durch eine dritte Flächenfilterschicht mit Drainagerohren abgedeckt, wobei vorzugsweise die radiale mineralische Ringdichtschicht die dritte Flächenfilterschicht umgreift, und oberhalb der dritten Flächenfilterschicht ist eine zweite mineralische Dichtlage, insbesondere aus Tonmineralien, angeordnet.

e) Die zweite mineralische Dichtlage ist nach oben hin von einer vierten Flächenfilterschicht mit Drainagerohren abgedeckt, die zur Behältermitte abfallend geneigt ist.

f) Die vierte Flächenfilterschicht ist nach oben hin durch eine, vorzugsweise mit abgedeckten Öffnungen versehene, Deckplatte, insbesondere aus Beton, überdeckt, deren Oberfläche zum Mantel des Behälters hin abfallend geneigt ist und die den Mantel übergreift.

g) Die Deckplatte ist gegenüber dem Mantel beweglich gelagert, um Volumsveränderungen im Deponiegutkörper zu folgen, wobei vorzugsweise an der Deckplatte ein radialer Innenrand vorgesehen ist, der auf der zweiten mineralischen Dichtlage aufruht und entlang der eine an der Mantelinnenseite des Behälters dicht anliegende, über die Oberseite des Mantels hochgezogene Boden/Seitendichtschürze abdichtend gleiten kann.

h) Zwischen der Oberfläche der zweiten mineralischen Dichtlage und der vierten Flächenfilterschicht ist eine seitlich an der vierten Flächenfilterschicht hochgezogene Decken/Seitendichtschürze vorgesehen.

j) Ein hochgezogener Abschnitt der Decken/Seitendichtschürze ist am radialen Innenrand der Deckplatte abdichtend gleitbar vorgesehen.

k) Die Sohle der ersten, zweiten und/oder vierten Flächenfilterschicht ist zur Behältermitte hin abfallend geneigt.

l) Bei einem Untertageinbau des Behälters zwischen Deckplatte und Oberflächenschüttung ist eine weitere Flächenfilterschicht angeordnet.

m) Das Deponiegut ist zwischen einer mantelseitigen, vorzugsweise gewellten, metallischen Stützschicht, insbesondere aus Stahl und einer zentralen, vor zugsweise gewellten, metallischen Stützschicht, insbesondere aus Kupfer, gelagert.

n) In der ersten, zweiten und/oder dritten Flächenfilterschicht sind Rohrsysteme zum Einbringen und/oder Absaugen von flüssigen und/oder gasförmigen Medien in diese Schicht vorgesehen.

Weiterhin betrifft die Erfindung die besondere Ausbildung eines abnehmbaren Daches für zylindrische Deponierbehälter mit zentral beschicktem Kreisförderer für das Deponiegut. Derartige Dächer, die nach Befüllen eines Behälters abgebaut und zum Befüllen eines neuen Behälters auf diesen wieder aufgesetzt werden, sind z.B. aus der EP-A 204 895 bekannt.

In dieser Druckschrift ist angegeben, daß die dort beschriebenen Tiefbehälter nach ihrer Füllung in bekannter Weise mit einer mineralischen Abdeckung gegen Flüssigkeitseintritt von oben verschlossen werden.

Das erfindungsgemäße abnehmbare Dach ist vor allem durch gekennzeichnet, daß das Dach einen radial verlaufenden, zentralen, indirekt am Behältermantel abgestützten Kastenträger aufweist, an dem im rechten Winkel zum Kastenträger verlaufende Binder aufruhen, deren anderes Ende jeweils indirekt am Behältermantel abgestützt ist, wobei im Kastenträger ein Zubringerband für das einzubringende Deponiegut mit zentralem Abwurf auf den Kreisförderer vorgesehen ist.

In üblicher Weise kann der Kreisförderer mit einem Laufkran ausgerüstet sein und weist nach einem weiteren Kennzeichen der Erfindung ein Abwurfband auf, das vorzugsweise längenverstellbar ist. Insbesondere ist das Abwurfband, das das Deponiegut vom Zubringerband übernimmt, als Etagenband mit verfahrbaren Etagen ausgebildet.

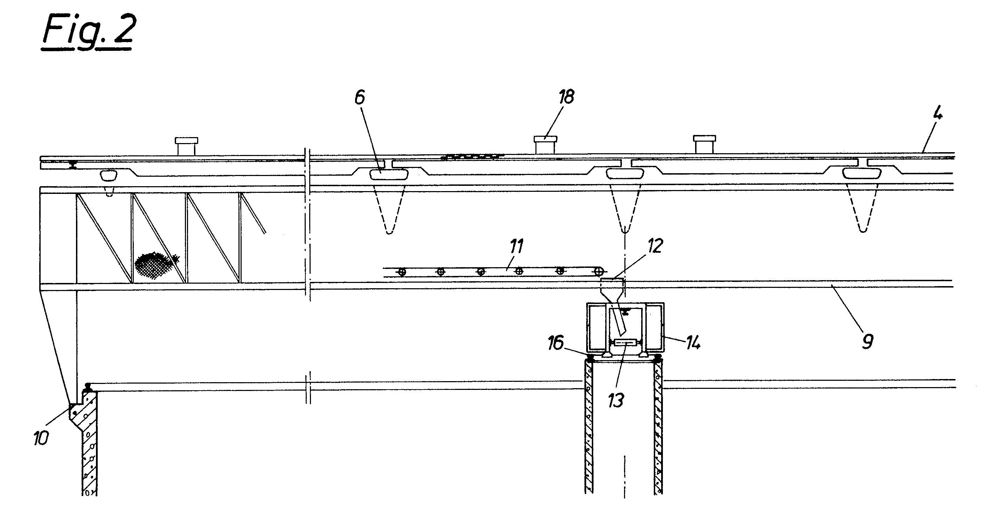

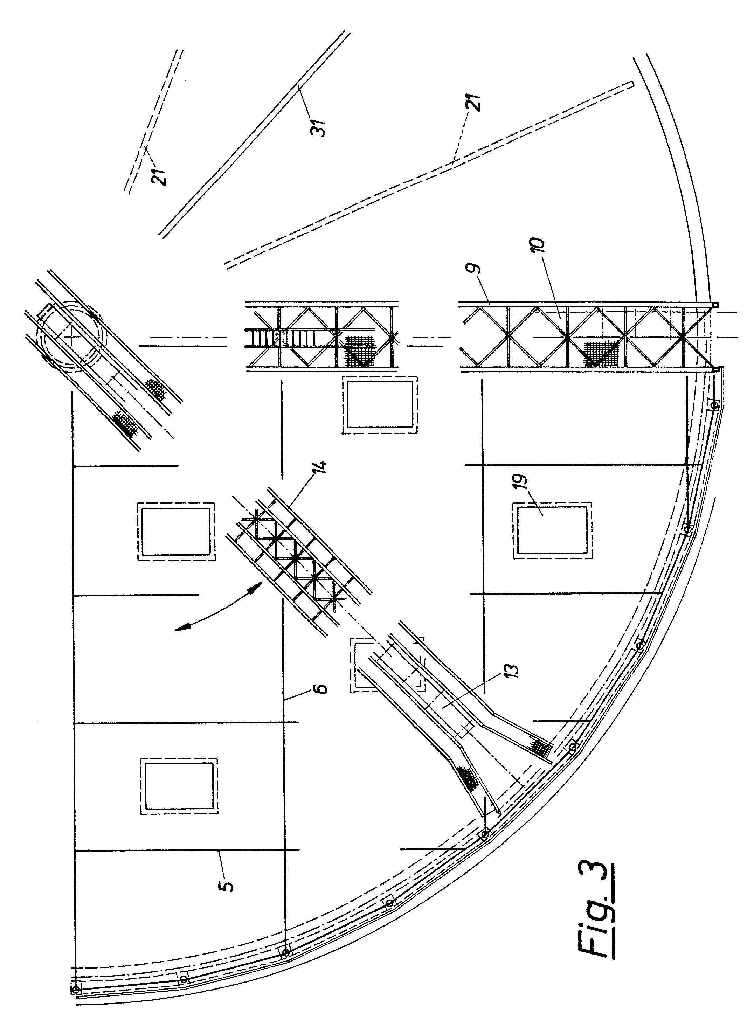

Die Erfindungsgegenstände werden anhand eines Beispiels, das die Erfindungsgegenstände kombiniert verwirklicht, unter Bezugnahme auf die Zeichnung näher beschrieben, in der Fig. 1 ein Teilschnitt durch einen Deponietiefbehälter -im linken Bereich während des Befüllens und im rechten Bereich nach Demontage des Daches und Anbringen der Oberflächenabdichtung -, Fig. 2 ein Teillängsschnitt durch den Hauptträger des Dachs mit Zubringerband, Fig. 3 eine ausgeschnittene Teilaufsicht auf den Behälter und Fig. 4 ein Teilschnitt durch den Behälter im gefüllten und abgedeckten Zustand ist.

Der dargestellte Tiefbehälter ist ein Zylinderbehälter mit einem Stahlbetonmantel 1 und einem zentralen Begehschacht 2, die auf einer Basis 3 (gewachsener Boden oder Streifenfundament) frei aufruhen, so daß ein Nachgeben des Mantels nach außen infolge der Befüllung möglich ist. Der Boden des Begehschachts 2 und die Bodenfläche zwischen Begehschacht 2 und Mantel 1 ist mit Ausgleichsbeton abgedeckt.

Das Behälterdach mit integriertem Zubringer und Kreisförderer besteht aus einem Belag 4, der über Pfetten 5 von Bindern 6 getragen ist, die an einem Ende-bei 8 - am Mantel 1 und am anderen Ende - bei 8 - auf einem zentralen Kastenprofil 9 abgestützt sind, das sich seinerseits - bei 10 - am Mantel 1 abstützt. Im Kastenprofil läuft ein Zubringerband 11, das Deponiegut von außerhalb zum zentralen Abwurftrichter 12 fördert, an der Profilunterseite ist eine Klappleiter vorgesehen.

Durch den Abwurftrichter 12 gelangt das Deponiegut auf das Abwufband 13 eines Kreisförderers 14, der seinerseits ein Kastenprofil ist, das auf einer peripheren Rollenführung 15 am Mantel 1 und einer zentralen Rollenführung 16 am Begehschacht 2 umläuft. Am Obergurt des Kastenprofils ist ein Laufkatzenkran 17 geführt; das Abwurfband 13 ist ein Etagenband, sodaß der Abwurf des Deponieguts in den Behälter an jeder Stelle entlang des Kreisförderers 14 erfolgen kann.

Der Dachbelag 4 weist Entlüftungshauben 18 und Dachfenster 19 auf, die als Explosionsklappen dienen.

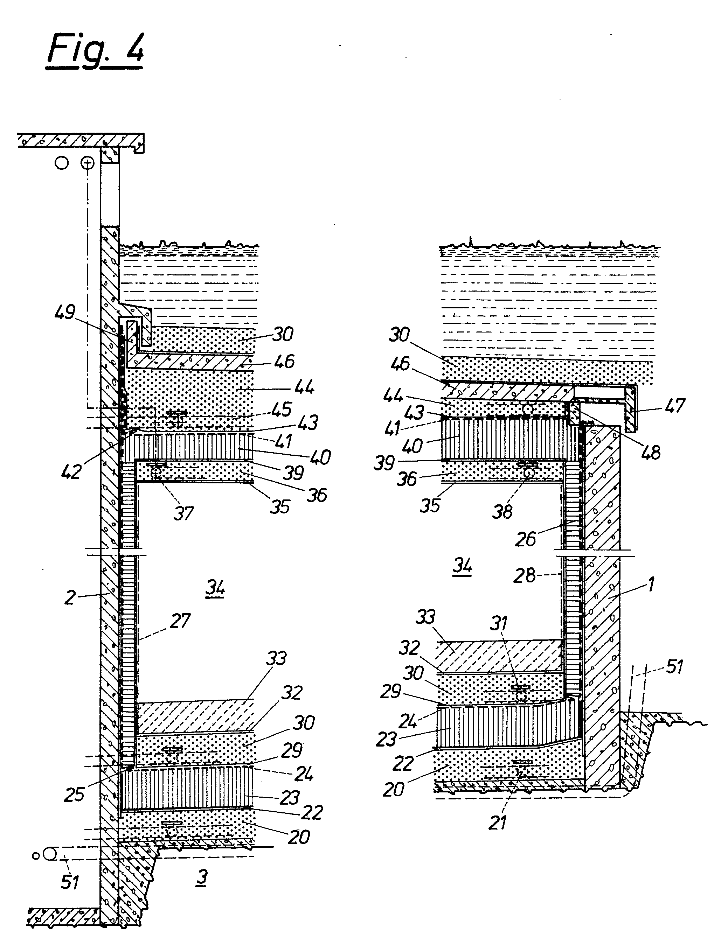

Vor Einbringen von Deponiergut in den Behälter wird auf den Ausgleichsbeton zwischen Begehschacht 2 und Mantel 1, dessen Oberfläche zum Begehschacht hin abfallend geneigt ist, z.B. eine 4 % Neigung aufweist, eine erste Flächenfilterschicht 20 aufgebracht, in die sternförmig eine Drainagerohrschar 21 eingelegt wird, die abfallend in den Begehschacht 2 geführt ist. Zwischen den einzelnen Drainagerohren 21 ist die Flächenfilterschicht vorteilhaft dachartig ausgebildet, sodaß sie in der Mitte zwischen zwei benachbarten Drainagerohren am höchsten ist und im Bereich der Drainagerohre die geringste Höhe hat, sodaß ebene Abflußflächen gebildet werden, wie dies z.B. aus der EP-A 0 130 773 Fig. 4 und 5, für eine Peripherentwässerung mit außenliegender Ringleitung bekannt ist.

Es ist aber auch möglich, eine Flächenfilterschicht im wesentlichen einheitlicher Dicke auszubilden, wobei dann zweckmäßig zusätzliche Füllrohre (Kontrollrohre) an der Oberfläche dieser Schicht vorgesehen werden.

Die Oberfläche der ersten Flächenfilterschicht wird mit einem flüssigkeits-und gasdurchlässigen Kunststoffnetz oder -vlies 22 abgedeckt, auf das eine erste mineralische Dichtlage 23, insbesondere aus Tonmineralien, aufgebracht wird, deren ebene Oberfläche wiederum zum Begehschacht 2 hin abfallend geneigt ist. Die Oberfläche der ersten mineralischen Dichtlage 23 wird mit einer flüssigkeits- und gasdichten HDPE-Folie, z.B.einer Stärke von etwa 3 oder höher, als Boden/Seitendichtschürze 24 abgedeckt, die an der Außenwand des Begehschachts 2 und der Innenwand des Mantels satt anliegend hochgezogen wird und in den Übergangsbereichen Boden/Seitenwand jeweils eine Dehnungsausgleichsfalte 25 aufweist. In den Bereichen der Innenwand des Mantels 1 und der Außenwand des Begehschachts 2 wird jeweils eine an der Boden/Seitendichtschürze 24 satt anliegende radiale Ringdichtschicht 26 angeordnet, die ebenfalls vorzugsweise aus Tonmineralien gebildet ist und gegen das Behälterinnere durch je ein metallisches Stützprofil abgesichert ist, wobei als Stützprofil zentral ein Kupferwellblech 27 und radial ein Stahlwellblech 28 vorgesehen ist.

Der freibleibende Teil der Oberfläche der ersten mineralischen Dichtlage 23 wird wiederum mit einem Kunststoffnetz oder -vlies 29 abgedeckt und darüber eine zweite mineralische Flächenfilterschicht 30 mit einer zweiten Drainagerohrschar 31 angeordnet.

Die zweite Flächenfilterschicht 30 und die zweite Drainagerohrschar 31 sind in gleicher Weise ausgebildet und angeordnet wie die erste Flächenfilterschicht 20 und die erste Rohrschar 21, wobei die zweiten Drainagerohre 31 gegenüber den ersten Drainagerohren 21 in Vertikalrichtung versetzt angeordnet sein können.

Die Stützprofile 27 und 28 ruhen auf der zweiten Flächenfilterschicht 30 auf, die wiederum mit einem Kunststoffnetz oder -vlies 32 abgedeckt ist, auf das eine poröse Schutzschicht 33, insbesondere eine Schüttlage aus klassierten Abfallstoffen, aufgebracht wird.

Auf dieser Schutzschicht 33 wird dann das Deponiegut 34 gelagert.

Die zweite Flächenfilterschicht 30 mit der Drainagerohrschar 31 dient der Sammlung und Abführung von aus dem gelagerten Deponiegutkörper austretender Flüssigkeit.

In der zweiten Flächenfilterschicht 30, vorteilhaft an deren Oberfläche, können weiterhin nicht dargestellte Rohrleitungen zur Zufuhr von Prozeßgas zum Deponiegut vorgesehen sein, die vorteilhaft ebenfalls strahlenförmig verlaufen, aber auch Ringleitungen sein können. Gegebenenfalls können auch die Drainagerohre zum Einbringen von Prozeßgas in das Deponiegut Verwendung finden.

Die erste Flächenfilterschicht 20 mit Drainagerohrschar 21 dient der Erfassung und Abführung von Leckflüssigkeit, die beim Versagen der Boden/Seitendichtschürze 24 und Versagen der ersten mineralischen Dichtlage 23 nach unten in die erste Flächenfilterschicht 20 eindringt. Die einzelnen Drainagerohre 21 werden einzeln durch Meßgeräte (auch optisch oder visuell) überwacht, sodaß eine rasche Lokalisierung von Leckstellen möglich ist. Weiterhin ist vorteilhaft in der ersten und/oder in der zweiten Flächenfilterschicht ein nicht dargestelltes Druck/Saugsystem vorgesehen, mit dem es gezielt möglich ist, einzelne oder alle Drainagerohre 21 bzw. 31 unter Unter- oder Überdruck zu setzen oder ein Lecken örtlich durch Gegendruck zu vermeiden. Auf diese Weise ist es z.B. möglich, die Basisdichtung, insbesondere deren Dichtfolie druckzuentlasten. In bekannter Weise sind in der ersten Flächenfilterschicht 20 vorteilhaft an sich bekannte Injektionsrohre vorgesehen, mit denen in den Bereich von Leckstellen ein Dichtmittel einbringbar ist.

Das Deponiegut 34, unter bzw. über dem unter Umständen eine dünne Abdeckschicht aus Flächenfiltermaterial in den Behälter eingebracht wird, wird in üblicher Weise gleichmäßig verteilt und gegebenenfalls verdichtet und nach Befüllen zur Höchstmarke mit einem Kunststoffnetz oder -vlies 35 abgedeckt, über dem eine dritte Flächenfilterschicht 36 aufgebracht wird, in die einerseits ein Gasdrainagerohr 37 und anderseits ein Flüssigkeitseinbringsystem 38 (die Bezugszeichen 37 und 38 sind willkürlich gesetzt und sagen über die Anordnung der einzelnen Rohre nicht aus) eingelagert ist, sodaß es nicht nur möglich ist, im Deponiegut entstehende Gase abzuführen, z.B. abzusaugen, sondern durch Zusammenwirkung der Rohrsysteme in der zweiten 30 und dritten 36 Flächen filterschicht das Deponiegut mit Flüssigkeiten und/oder Gasen gezielt zu spülen. Alle Rohr- und Leitungssysteme laufen über den Begehschacht 2; die nicht dargestellten Gas- und/oder Flüssigkeitsaufbereitungseinrichtungen zur Reinigung, Wertstoffgewinnung und/oder Chemikalienzudosierung sind getrennt vom Deponiegutbehälter und vorzugsweise über Tag angeordnet.

Die dritte Flächenfilterschicht 36 wird wiederum mit einem Kunststoffnetz oder -vlies 39 abgedeckt und darüber eine zweite mineralische Dichtlage 40 aufgebracht. die die innere und äußere Ringdichtschicht 26 zu einer Einheit verbindet. Die zweite mineralische Dichtlage 40 wird bis über die Oberkante des Mantels 1 geschüttet und mit einer zum Begehschacht 2 hin abfallend geneigten Oberfläche (Neigung z.B. 1 %) ausgebildet.

Darüber wird eine Decken/Seitendichtschürze 41 in Form einer z.B. 2 mm dicken HDPE-Folie gebreitet. die an der Begehschachtaußenwand anliegend an der Boden/Seitendichtschürze 24 hochgezogen wird und dort im Übergang horizontal/vertikal eine Deckungsausgleichsfalte 42 aufweist. Auch der periphere Rand der Decken/Seitendichtschürze ist hochgezogen, wie noch näher beschrieben wird.

Über der Decken/Seitendichtschürze 41 wird wiederum ein Kunststoffnetz oder -vlies 43 ausgebreitet und darauf eine vierte Flächenfilterschicht 44 mit Drainagerohren 45 ausgebildet, die in den Begehschacht 2 hinein entwässert und deren Oberfläche zum Mantel 1 hin abfallend geneigt ist (Neigung z.B. 2 %). Der Außenrand der Decken/Seitendichtschürze 41 wird über den Außenrand der vierten Flächenfilterschicht 44 hochgezogen. Endlich wird auf der vierten Flächenfilterschicht 44 eine den Mantel 1 nach außen überragende, nach außen geneigte Deckplatte 46 angeordnet, die vor Ort mit Begehdeckeln vorzugsweise als nebeneinanderliegende Einzelsegmente gegossen werden kann, oder aber aus überlappenden Fertig-Segmenten gebildet ist, die abgehoben werden können. Die Deckplatte 46 weist einen Außenflansch mit zwei nach unten gerichteten Rippen auf, von denen die äußere Rippe 47 den Mantel 1 übergreift und die innere Rippe 48 so ausgebildet ist, daß sie auf der zweiten mineralischen Dichtlage 40 aufruht und mit ihrer Außenfläche abdichtend an der über die Oberkante des Mantels 1 hochgezogenen Boden/Seitendichtschürze 24 nach unten gleiten kann, während der hochgezogene Außenrand der Decken/Seitendichtschürze 41 abdichtend zwischen der Innenfläche der inneren Rippe 48 und der vierten Flächenfilterschicht 44 gehalten ist.

Auf diese Weise kann die Deckplatte 46 zusammen mit der dritten 36 und vierten 40 Flächenfilterschicht und der dazwischen angeordneten zweiten mineralischen Dichtlage 40 beim Zusammensacken des Deponieguts während seiner Lagerung und Behandlung im Behälter mitgehen.

Im Bereich der Außenwand des Begehschachts 2 ist eine korrespondierende, einen nach oben gerichteten Flansch 49 der Deckplatte 46 übergreifende Führung für die Deckplatte zu erkennen. Die Deckplatte 46 wird mit einer fünften Flächenfilterschicht 50 abgedeckt, die wie die Deckplatte ein Gefälle nach außen aufweist und darüber erfolgt eine übliche Oberflächenverfüllung, wobei natürlich günstig ist, für einen oberflächenwasserbindenden Bewuchs zu sorgen.

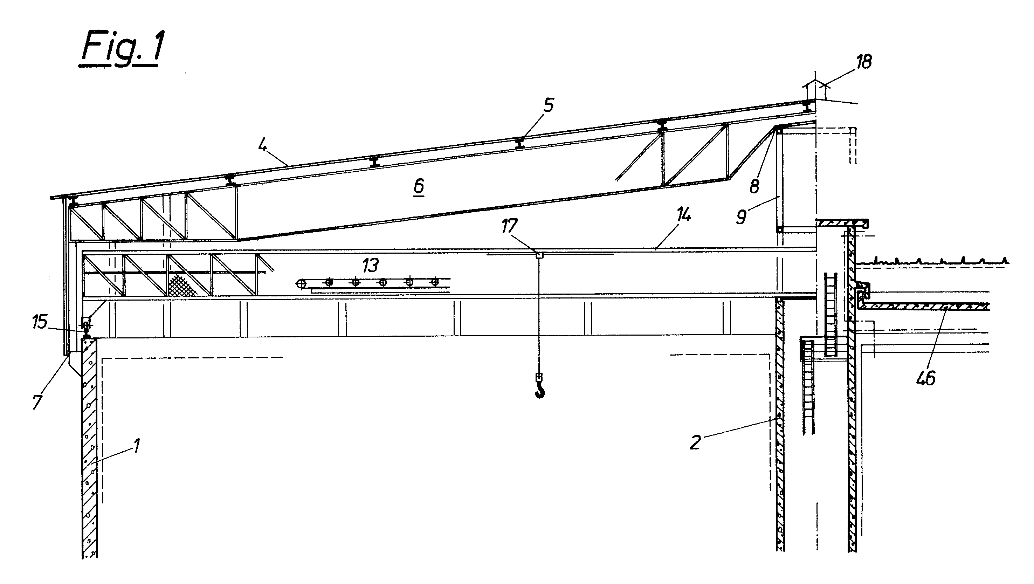

Ein Zuluftkanal 51 und die Elektroversorgung sind von außen unterhalb des Behälterbodens in den Begehschacht 2 geführt; es ist gegebenenfalls möglich, alle Ver- und Entsorgungsleitungen durch den Begehschacht 2 zu führen, der, wie aus Fig. 1 ersichtlich ist, nach dem Abbau der Dachkonstruktion entsprechend abgedeckt wird.

Die Oberfläche der Deckplatte 46 ist in üblicher Weise, z.B. mittels Bitumenanstrich, isoliert.

Die erste und zweite Flächenfilterschicht 20 und 30 haben beispielsweise je eine Dicke von 50 cm, die Kunststoffnetze oder -vliese 23, 38 und 32 jeweils ein Flächengewicht von 750 g/ m², die erste mineralische Dichtlage eine Dicke von 3 x 20 cm, die Schutzschicht 30 eine Dicke von 50 cm, die radiale Ringdichtschicht eine Dicke von 20 cm, die Kunststoffnetze oder -vliese 35, 39 und 43 jeweils ein Flächengewicht von 200 g/m², die dritte Flächenfilterschicht 36 eine Dicke von 30 cm, die zweite mineralische Dichtlage 40 eine Dicke von 40 bis 45 cm, die vierte Flächenfilterschicht eine Dicke von 100 cm an der Außenwand des Begehschachts 2 und von 20 cm am äußeren Rand, die Deckplatte 46 eine Dicke von 25 cm und die vierte Flächenfilterschicht 50 eine Dicke von 40 cm auf. Die Bodenverfüllung sollte etwa 100 bis 160 cm Unterboden aufweisen, darüber etwa 15 cm Humus. Die Flächenfilterschichten sind z.B. Kies mit Korngrößen von 16 bis 32 mm.

Die verschiedenen Drainage- und Leitungssysteme sind in üblicher Weise korrosionsbeständig ausgeführt, z.B. Steinzeug- oder Metallrohre. Der Durchmesser der Drainagerohre 21,31 und 45 ist z.B. 200 mm.

Zur Erzielung einer permanenten elektrochemischen Diffusionsströmung können ebenfalls beliebige Stützprofile 27, 28 auf Metall eingesetzt werden mit der Maßgabe der Korrosionsbeständigkeit und der Voraussetzung, daß sie in der Spannungsreihe an verschiedenen Stellen stehen, also fähig sind, miteinander ein Primärelement zu bilden. Bei Anwendung einer Fremderregung können die Stützprofile auch aus dem gleichen Material bestehen. Gegebenenfalls ist auch daran gedacht, fremderregte Elektrodenlanzen in das Deponiegut einzubringen,um örtlich gezielte Prozesse zu ermöglichen.

Die Erfindung ist auf das dargestellte Ausführungsbeispiel nicht beschränkt; in üblicher Weise können auch Behälter vorgesehen sein, die teilweise aus dem Boden ragen oder reine Hochbehälter sind.

Weiterhin kann z.B. für den Behälter eine Bodenwanne vorgesehen sein, insbesondere aus korrosionsgeschütztem Stahl oder Aluminium.

Durch das freie Auflagern des Behältermantels auf der Basis in der dargestellten Ausführungsform kann im Zusammenwirken mit dem besonderen Dichtungsaufbau der Behältermantel seitlich nachgeben, ohne daß eine Beeinflussung einer Dichtheit damit verbunden ist.

In obigem Zusammenhang sind unter Flüssigkeiten und/oder Gasen auch Dämpfe, z.B. Wasserdampf zu verstehen.

## Patentansprüche

1. Verfahren zum Behandeln von Deponiegut, dadurch gekennzeichnet, daß Deponiegut in einem allseits zumindest im wesentlichen abgedichteten Deponiekörper mit Flüssigkeiten und/oder Gasen behandelt, insbesondere gespült und/oder gelaugt wird.

2. Verfahren nach Anspruch 1,dadurch gekennzeichnet, daß das Deponiegut mit mit dem Deponiegut reaktionsfähige Bestandteile enthaltenden Flüssigkeiten und/oder Gasen behandelt wird.

3. Verfahren nach Anspruch 1 oder 2, dadurch gekennzeichnet, daß die Behandlungsflüssigkeiten und die Gase im Kreislauf geführt werden, wobei vorzugsweise eine oder mehrere Flüssigkeits- und/oder Gasreinigungsstufen im Kreislauf vorgesehen sind.

4. Verfahren nach einem der Ansprüche 1 - 3, dadurch gekennzeichnet, daß im Deponiekörper eine gerichtete elektrochemische Diffusionsströmung aufrechterhalten wird.

5. Behälter zur Langzeitlagerung von Deponiegut , mit einem auf einer Basis aufruhenden Mantel und einer Abdeckung für den Mantelhohlraum, insbesondere Ringbehälter mit Zentralbeschickung und zentralem Begehschacht, sowie mit einer Radialgefälleentwässerung zur Behälterbodenmitte, vorzugsweise zur Durchführung des Verfahrens nach einem der Ansprüche 1 - 4, dadurch gekennzeichnet, daß am Behälterboden, gegebenenfalls oberhalb einer Ausgleichsschicht zur Basis (3), eine erste Flächenfilterschicht (20) mit Drainagerohren (21) und darüber eine erste mineralische Dichtlage (23), insbesondere aus Tonmineralien, angeordnet ist, wobei die erste Flächenfilterschicht (20) und die Dichtlage (23) jeweils die freie Oberfläche des Behälterbodens bedecken, und daß sich an die Dichtlage (23) nach oben hin eine Boden/Seitendichtschürze (24) anschließt, deren Seitenteil dicht am Mantel (1) und gegebenenfalls an Behältereinbauten, wie Schächten (2) anliegt, sowie daß oberhalb und radial innerhalb der Boden/Seitendichtschürze (24) eine zweite Flächenfilterschicht (30) mit Drainagerohren (31) vorgesehen ist, auf der, vorzugs weise unter Zwischenschaltung einer porösen Schutzschicht (33) für die zweite Flächenfilterschicht (30), das Deponiegut (34) lagert.

6. Behälter nach Anspruch 5, dadurch gekennzeichnet, daß zwischen der zweiten Flächenfilterschicht (30), gegebenenfalls Schutzschicht (33), und Deponiegut (34) einerseits sowie der Boden/Seitendichtschürze (24) anderseits eine radiale mineralische Ringdichtschicht (26) vorgesdehen ist, die vorzugsweise zum Deponiegut (34) hin durch ein Stützprofil (27,28) abgestützt ist.

7. Behälter nach Anspruch 5 oder 6, dadurch gekennzeichnet, daß die Boden/Seitendichtschürze (24) aus elastischem Material, vorzugsweise einer HDPE-Folie, gebildet ist und insbesondere im Boden/Seitenübergangsbereich eine Dehnungsausgleichzone (25) aufweist.

8. Behälter nach einem der Ansprüche 1 - 7, dadurch gekennzeichnet, daß zwischen der ersten Flächenfilterschicht (20) und der mineralischen Dichtlage (23), zwischen der Boden/Seitendichtschürze (24) und der zweiten Flächenfilterschicht (30) und/oder zwischen der zweiten Flächenfilterschicht (30) und der porösen Schutzschicht (33) eine gas- und flüssigkeitsdurchlässige Stützschicht (22,29,32), insbesondere ein Netz oder Vlies, vorzugsweise aus Kunststoff, vorgesehen ist.

9. Behälter nach einem der Ansprüche 1 - 8, dadurch gekennzeichnet, daß die Oberfläche des gelagerten Deponieguts (34) durch eine dritte Flächenfilterschicht (36) mit Drainagerohren (37) abgedeckt ist, wobei vorzugsweise die radiale mineralische Ringdichtschicht (26) die dritte Flächenfilterschicht (36) umgreift, und daß oberhalb der dritten Flächenfilterschicht (36) eine zweite mineralische Dichtlage (40), insbesondere aus Tonmineralien, angeordnet ist.

10. Behälter nach Anspruch 9, dadurch gekennzeichnet, daß die zweite mineralische Dichtlage (40) nach oben hin von einer vierten Flächenfilterschicht (44) mit Drainagerohren (45) abgedeckt ist, die zur Behältermitte abfallend geneigt ist.

11. Behälter nach Anspruch 9 oder 10, dadurch gekennzeichnet, daß die vierte Flächenfilterschicht (44) nach oben hin durch eine, vorzugsweise mit abgedeckten Öffnungen versehen, Deckplatte (46), insbesondere aus Beton, überdeckt ist, deren Oberfläche zum Mantel (1) des Behälters hin abfallend geneigt ist und die den Mantel (1) übergreift.

12. Behälter nach Anspruch 11, dadurch gekennzeichnet, daß die Deckplatte (46) gegenüber dem Mantel (1) beweglich gelagert ist, um Volumsveränderungen im Deponiegutkörper (34) zu folgen, wobei vorzugsweise an der Deckplatte (46) ein radialer Innenrand (48) vorgesehen ist, der auf der zweiten mineralischen Dichtlage (40) aufruht und entlang der an der Mantelinnenseite des Behälters dicht anliegenden, über die Oberseite des Mantels hochgezogenen Boden/Seitendichtschürze (24) abdichtend gleiten kann.

13. Behälter nach einem der Ansprüche 1 - 12, dadurch gekennzeichnet, daß zwischen der Oberfläche der zweiten mineralischen Dichtlage (40) und der vierten Flächenfilterschicht (44) eine seitlich an der vierten Flächenfilterschicht (44) hochgezogene Decken/Seitendichtschürze (41) vorgesehen ist.

14. Behälter nach Anspruch 13, dadurch gekennzeichnet, daß ein hochgezogener Abschnitt der Decken/Seitendichtschürze (41) am radialen Innenrand (48) der Deckplatte (46) abdichtend vorgesehen ist.

15. Behälter nach einem der Ansprüche 1 - 14, dadurch gekennzeichnet, daß die Sohle der ersten (20), zweiten (30) und/oder vierten (44) Flächenfilterschicht zur Behältermitte hin abfallend geneigt ist.

16. Behälter nach einem der Ansprüche 1 - 15, dadurch gekennzeichnet, daß bei einem Untertageinbau des Behälters zwischen Deckplatte (46) und Oberflächenschüttung eine weiter Flächenfilterschicht (50) angeordnet ist.

17. Behälter nach einem der Ansprüche 6 - 16, dadurch gekennzeichnet, daß das Deponiegut (34) zwischen einer mantelseitigen, vorzugsweise gewellten, metallischen Stützschicht (28), insbesondere aus Stahl, und einer zentralen, vorzugsweise gewellten, metallischen Stützschicht (27), insbesondere aus Kupfer, gelagert ist.

18. Behälter nach einem der Ansprüche 1 - 17, dadurch gekennzeichnet, daß in der ersten (20), zweiten (30) und/oder dritten (36) Flächenfilterschicht Rohrsysteme (38) zum Einbringen und/oder Absaugen von flüssigen und/oder gasförmigen Medien in diese Schichten vorgesehen sind.

19. Abnehmbares Dach für zylindrische Deponiebehälter mit zentral beschicktem Kreisförderer für das Deponiegut, insbesondere für einen Behälter nach einem der Ansprüche 1 - 18, dadurch gekennzeichnet, daß das Dach einen radial verlaufenden, zentralen, indirekt am Behältermantel (1) abgestützten Kastenträger (9) aufweist, an dem im rechten Winkel zum Kastenträger verlaufende Binder (6) aufruhen, deren anderes Ende jeweils indirekt am Behältermantel (1) abgestützt ist, wobei im Kastenträger (9) ein Zubringerband (11) für das einzubringende Deponiegut mit zentralem Abwurf auf den Kreisförderer (14) vorgesehen ist.

20. Dach nach Anspruch 19, dadurch gekennzeichnet, daß der Kreisförderer (14) in bekannter Weise mit einem Laufkran (17) ausgerüstet ist.

21. Dach nach Anspruch 19 oder 20, dadurch gekennzeichnet, daß der Kreisförderer ein Abwurfband (13) aufweist, das vorzugsweise längsverstellbar, insbesondere als Etagenband ausgebildet ist.

Fig.1

EP 0 303 591 A2

EP 0 303 591 A2

Fig.2

*Fig. 3*

## Fig. 4